# EUROPEAN PATENT APPLICATION

(11) **EP 1 092 658 A1**
(43) Date of publication of application: **18.04.2001**
(21) Application number: 99810926.8
(22) Date of filing: 13.10.1999
(51) Int. Cl.: B65G 43/00, B66B 23/00

(54) **Roller for conveyer installations**

(71) Applicant: INVENTIO AG, CH-6052 Hergiswil (CH)
(72) Inventor: Chin, Geeming, Edison, NJ 08820 (US)

(57) **Abstract**

A disk-shaped inner body of a roller, preferably for escalators, moving pavements and the like, is provided with a wear indicator, which indicates that a critical minimum diameter of the roller has been reached as a consequence of the wear of a cover of the roller. A border element, over which the cover lies, has a periphery which lies at the minimum permissible diameter of the roller. The periphery is provided with a noise-generating construction, such as an indented border, pins, or spaced metal inserts. The periphery, when exposed due to wear of the cover, contact the guiding device on which the roller rolls and produces an acoustically discernable noise which serves as an audible wear warning.

## Description

### Field of Invention

The invention relates to a roller for conveyor installations, preferably for escalators and moving pavements.

### Background Information and Prior Art

Rollers for escalators or moving pavements, so-called stepped rollers, conventionally consist of a cover or tire of an elastomer, which is vulcanized onto a inner body of metal or plastic or cast, for example, as in the case of stepped rollers known from German Auslegeschrift 1,724,200, as a noise insulating polyurethane covering onto a correspondingly suitable body. An annular groove, as well as transverse grooves at the periphery of the disk-shaped basic body, produce a non-positive and a positive connection between the covering and body, which introduces longitudinal and transverse forces, which act on the cover during the operation of the escalator. At the same time, the cover is subject to mechanical wear in the form of strong abrasion and/or material aging. The abrasion in particular usually leads to wear and a decrease in the overall diameter of the rollers. If the wear exceeds a certain level, the step element or its tread drops below a permissible height level in relation to the step guide of the escalator, so that, particularly at the inlet region of the step into the comb of the first step plate of the escalator or of the moving pavement, a potentially dangerous site is formed.

Conventional methods for monitoring the condition of the roller are time consuming, because the escalator or the moving pavement usually has to be partially dismantled for a visual inspection, or an experienced service mechanic must walk on each individual step and, at the same time, check the steps for excessive guidance slackness. The latter procedure in particular is not adequately reliable.

### Object of the Invention

It is an object of the present invention to provide a conveyor roller which allows its wear state to be recognized reliably and in a simple manner.

A further object of the present invention is to provide a conveyor roller which includes an integral wear indicator.

### Summary of the Invention

Pursuant to the invention, the foregoing and other objectives and purposes are carried out by with an integral wear indicator, which make it possible to detect a critical operating state of the cover over the bearing surface acoustically. Because the wear indicator, pursuant to the invention, is integral with each roller, the occurrence of the acoustic signal represents reliable and easily identifiable evidence that one or more of the rollers are worn and should be exchanged. By appropriately suitable dimensioning of the wear indicators, provision can be made so that the rollers and, with that, the escalator or the moving pavement can be run under an emergency or worn condition for a period, which not only enables the partial dismantling of the escalator or of the moving pavement to be limited exclusively to cases with an actual need, but also allows the dismantling to be performed as part of following scheduled maintenance work.

The wear indicator is constructed in the form of a peripheral surface of an inner roller body, which extends discontinuously in the rolling direction of the roller and onto which a cover forming the main bearing peripheral surface is mounted as a tire. The roller rolls in the known manner on the cover over a bearing surface. As a result of operationally induced wear, induced by rolling friction and flexing, the bearing cover wears. The cover ultimately wears away to such an extent that the discontinuous and/or out of round peripheral surface of the hard inner body is exposed. The external diameter of the discontinuous peripheral surface is chosen to be the same diameter as the minimum acceptable diameter of the roller, and the roller diameter at which wear is to be indicated.

In normal operation, the elastic tire rolls flexibly and correspondingly noiselessly on the guiding devices guiding it. On the other hand, the discontinuous peripheral surface is manufactured from a dimensionally stable, largely inelastic material, so that it develops a clearly discernible noise when in rolling contact with the guiding devices. This noise serves as an acoustic warning that wear of the cover or tire has reached a pre-determined level.

### Brief Description of the Drawings

Using an escalator as an example, an embodiment of the invention is described in detail in the following, by means of the drawing, in which:
Figure 1 is a diagrammatic longitudinal sectional view of an escalator utilizing the present invention;
Figure 2 is a cross-sectional view of the inventive stepped roller;
Figure 3 is a semi-sectional perspective view of the stepped roller of Figure 2; and
Figure 4 is a cross-sectional view of an alternative embodiment of the invention.

### Detailed Description of the Invention

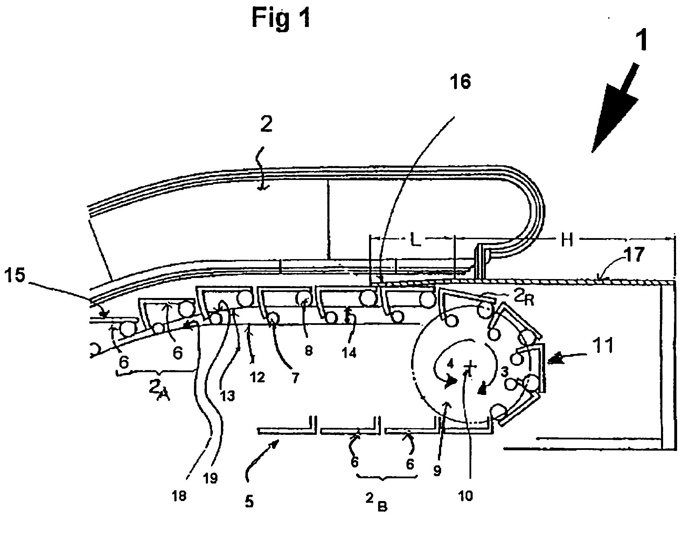

Figure 1 shows a known escalator 1 with a balustrade 2 and a stepped belt 5 formed of hinge-coupled step elements 6, longitudinally revolving endlessly in one of opposite directions 3, 4 between an upper floor and a lower floor.

Each step element 6 has, on opposite sides, two stepped rollers 7, 8, which are rotatably mounted on kingpins (not shown) protruding laterally from the step element 6. At the ends of the escalator 1, on the upper and lower floors, the stepped belt 5 is directed about a turning mechanism 11, including two serrated wheels 9, which are disposed coaxially along a shaft 10 and engage the stepped belt for drive purposes. The shaft 10 of the serrated wheel pair can be driven in the desired direction 3, 4 by a driving mechanism, which is also not shown. Rotation of the serrated wheel pair drives the stepped belt of the step elements in the desired direction.

In the region between the upper and lower stepped belt turning mechanisms 11, the stepped rollers 7, 8 of the escalator 1 each run on a different guide rail 12, 13. The vertical distance 14 between the guide rails 12 and 13 align the stepped rollers 7 and 8 and, above them, the step elements 6 at the upper and lower ends of the escalator 1 so that their profiled treads 15 may be guided into a uniform engagement with a comb 16, for example, at the upper end. The comb 16 forms the free end of a step plate 17, under which the step elements 6 are guided onto the belt turning mechanism 11. The guide rails 12, 13 usually are made from metal and have polished guiding surfaces 18, 19, on which the stepped rollers 7, 8 roll.

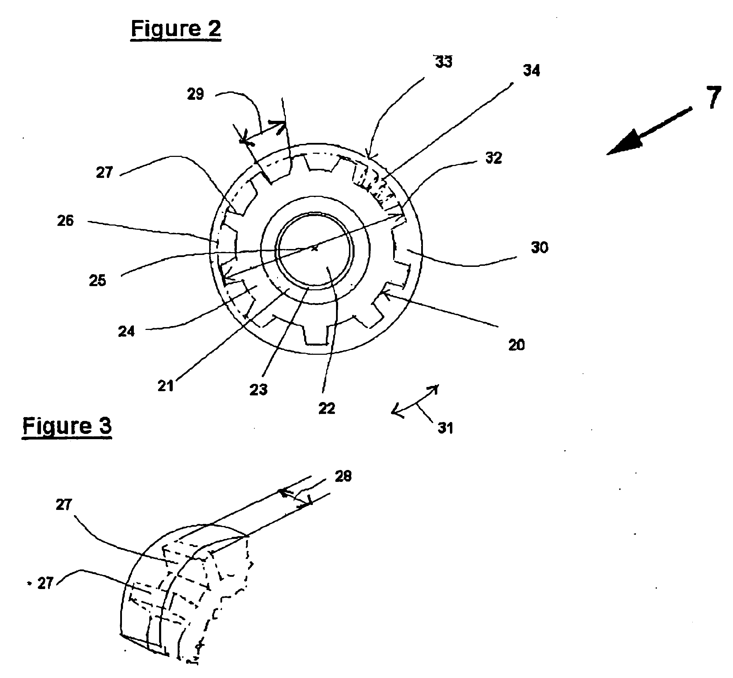

In Figure 2, the inventive roller construction is shown by means of a cross section of a stepped roller 7; it applies in a similar manner also to the construction of a stepped roller 8. The stepped roller 7 consists of an inner body or core 20 which has a hub or bearing 21 with a bushing 23 inserted into its hub bore hole 22, the support the bearing on an axle and an indented border or peripheral element 24 which forms the periphery of the inner body 20. A noise-insulating tire 33 of an elastic, springy material, preferably of polyurethane, on which the stepped roller 7 rolls, is mounted upon the inner body.

The indented border element 24 may be formed of a durable plastic material, which may be applied to and formed upon the hub 21 by a pressure spray process and is firmly connected therewith. The indented border element 24 can also be constructed as a premanufactured ring, such as of metal, which is fastened to the hub. Pursuant to the invention, the diameter 25 of the head circle 26 of the teeth or protrusions 27 of the border element is equal to the minimum permissible operating diameter of the stepped roller 7.

The protrusions 27 have a generally rectangular profile here and, as shown clearly in Figure 3, are disposed distributed at equal intervals 29 over the whole of the periphery of the inner body 20, and extend across the whole thickness or width 28 of the inner body 20. The mutual distance 29 between adjacent protrusions 27 may be at least equal to the profile width of the protrusions 27.

The shape of the protrusions 27 can be selected freely, with the proviso that the head circle 26 of the border element 24 in which the protrusions are formed must be discontinuous so that the inner body 20 has a discontinuous rolling surface 32 in a rolling direction 31 of the stepped roller 7.

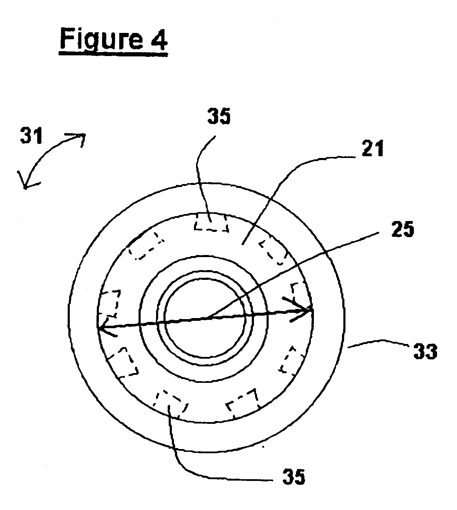

Pins or spring clicker arms, which protrude over the surface of the inner body 20 and extend outwardly as far as the dimensions of the minimum permissible diameter 25 of the stepped roller 7, can be provided in the periphery of indented border element in the spaces 30, as depicted in phantom at 34 in Fig. 2. A further alternative construction is a hub 21, the disk diameter of which is equal in size to the minimum permissible diameter 25 of the stepped roller 7 and at the periphery of which, metal inserts 35, spaced apart in the rolling direction 31, are inserted, their outwardly-lying surface lying flush with the surface of the hub, as depicted in Figure 4.

The selection of the material for the indented border element 24 and the equipping of the inner body within the sense of the invention is dictated by the requirement that its abrasion resistance is to be different than, and preferably higher than, that of the elastomeric tire 33 and, in rolling contact with the guide rails, it produces a rolling noise which can be differentiated clearly from the rolling noise of the elastomeric tire 33 which surrounds the border element and provides the normal bearing surface for the roller on the guide rails.

The elastomeric tire 33 which covers the indented border element 24 of the inner body 20 is preferably polyurethane. Different thermoplastic materials with noise-insulating properties can also be used as material for the tire 33. The tire 33 may be extruded in a known manner on the inner body 20 and consequently connected with the latter mostly in a positive manner, and always in a non-positive manner as known in the art. The indented border 24 is intended to anchor the tire 33 securely on the inner body 20.

When the escalator 1 is started up, provided that the stepped rollers 7, 8 are not worn, the step elements 6 are guided with the help of guide rails 12, 13, so that the level tread 15 of the step elements 6 pass through the comb 16 with little vertical clearance. At the same time, the elastic tires 33 roll flexibly and correspondingly noiselessly on the guide rails 12, 13 guiding the step elements.

While the escalator is operating and the stepped belt 5 is revolving, the stepped rollers 7, 8 are subjected to constantly changing eccentric loads, because people step on and off, change from one side to the other, or walk up and down the escalator 1. These loads lead to wear of the tire of the stepped rollers 7, 8. When the elastomeric tire 33 is worn out or physically damaged and roller abrasion has decreased the roller diameter to the distance 25, as defined by the head circle 26, the stepped rollers 7, 8 begin to roll on the protrusions 27, which have been produced from the hard durable plastic or metal. In rolling contact with the metallic guide rails 12, 13, the indented border element 24 then develops a clearly discernible rolling noise and, by these means, indicates that the stepped rollers 7, 8 are worn. With an appropriate choice of head circle diameter, the acoustic warning noise can be developed before the wear of the roller has reached a point where the escalator must be put out of service for repair. The continuous nature of the acoustic signal is maintained until replacement is made, thus insuring that critical roller wear is not overlooked.

## Claims

1. A roller for escalators, conveyor installations and the like, comprising an inner body for rotation about an axle, and a wearable cover supported upon the inner body, wherein the inner body includes a wear indicator for generating an audible signal which is activated when a critical minimum diameter of the cover has been reached.

2. The roller of claim 1, wherein the wear indicator comprises a discontinuous peripheral surface of the inner body in a rolling direction of the roller, the maximum external diameter of the discontinuous surface being equal to the critical minimum diameter of the roller.

3. The roller of claim 1 or 2, wherein the discontinuous peripheral surface is formed of a material which generates acoustically discernible noise when in rolling contact with a guiding device on which it rolls.

4. The roller of claim 2, wherein the inner body includes an indented border element surrounding a hub, the discontinuous surface comprising an indented peripheral surface of the indented border element.

5. The roller of claim 4, wherein the indented peripheral surface comprises a plurality of protrusions distributed over a periphery of the basic body, a mutual distance between adjacent protrusions being at least equal to a width of the protrusions.

6. The roller of claim 1 or 3, wherein the wear indicator comprises a plurality of pins extending outwardly for the inner body, distal ends of the pins being at the critical minimum diameter.

7. The roller of claim 1, wherein the wear indicator comprises a plurality of metal inserts in the inner body spaced apart in the rolling direction, a distal surface of the inserts being at the critical minimum diameter.
